# DEMANDE DE BREVET EUROPEEN

(11) **EP 2 075 374 A1**
(43) Date de publication de la demande: **01.07.2009**
(21) Numéro de dépôt: 07024440.5
(22) Date de dépôt: 17.12.2007
(51) Int. Cl.: D21H 19/56

(54) **Procédé de fabrication d'une sauce de couchage avec mise en oeuvre d'un epaississant acrylique à chaine hydrophobe ramifiée et sauce obtenue**

(71) Demandeur: Omya Development AG, 4665 Oftringen (CH)
(72) Inventeur: Suau, Jean-Marc, FR- 69 480 LUCENAY (FR); Gane, Patrick Arthur Charles, CH- 4852 ROTHRIST (CH)
(74) Mandataire: Richebourg, Michel François

(57) **Abrégé**

L'invention consiste en un procédé de fabrication d'une sauce de couchage papetière contenant une matière minérale, avec la mise en oeuvre comme agent épaississant de ladite sauce, d'un polymère hydrosoluble constitué d'au moins un monomère anionique à insaturation éthylénique, et d'au moins un monomère oxyalkylé à insaturation éthylénique et terminé par une chaîne hydrophobe ramifiée alkyle, alkylaryle, arylalkyle, aryle, saturée ou non, ayant de 14 à 21 atomes de carbone et possédant 2 ramifications ayant au moins 6 atomes de carbone. Ledit polymère est introduit dans la sauce soit directement, soit à partir d'une étape préalable de broyage, de dispersion ou de concentration de la matière minérale dans l'eau, suivi ou non par une étape de séchage. On améliore ainsi la rétention d'eau de ladite sauce, ce qui contribue à une meilleure imprimabilité du papier couché par ladite sauce.

## Description

Dans le cadre de la fabrication d'une feuille de papier couchée, une première étape consiste en la transformation de la pâte à papier, par l'intermédiaire de la machine à papier, en une feuille non encore couchée. La pâte à papier contient essentiellement des fibres naturelles de cellulose ou des fibres synthétiques, de l'eau, et une ou plusieurs matières minérales tel que le carbonate de calcium, ainsi que divers autres additifs tels que des agents dits de "collage". On parle alors de l'utilisation d'une matière minérale (tel que le carbonate de calcium) en "charge de masse".

La deuxième étape réside dans le couchage de la feuille précédemment obtenue. Cette opération consiste à déposer sur la surface du papier support une composition aqueuse dénommée "sauce de couchage" qui contient notamment de l'eau, une ou plusieurs matières minérales tel que le carbonate de calcium, un ou plusieurs liants ainsi que divers additifs. Dans le cas de la fabrication de la sauce de couchage, on parle de l'utilisation d'une matière minérale (tel que le carbonate de calcium) en "pigments de couchage".

Après dépôt sur le support, la sauce de couchage possède une tendance naturelle à transférer dans le support, tout ou partie de l'eau et des substances hydrosolubles ou en suspension qu'elle contient. On cherche alors à ralentir cette migration dans le papier support, en vue de maintenir une répartition homogène des substances hydrosolubles ou en suspension dans l'épaisseur de la sauce de couchage ainsi déposée, ce qui améliore au final l'état de surface et l'imprimabilité du papier.

Pour ralentir la pénétration de la sauce de couchage à l'intérieur de la feuille, il existe 2 moyens selon qu'on se place au niveau de la sauce de couchage ou de la feuille de papier.

Le premier consiste à modifier les propriétés d'absorption du papier support par réduction de sa porosité ou par augmentation de son degré d'hydrophobicité. A cet effet, on peut utiliser dans la fabrication de la feuille des agents particuliers dits "inhibiteurs de pénétration de la sauce" comme des résines hydrophiles (JP 06-219038), des agents de "collage" de nature hydrophobe comme des résines avec des sulfates d'alumine (WO 96 / 23105), ou encore des agents de "traitement" qui rendent hydrophobe la surface du carbonate de calcium mis en oeuvre dans la feuille comme charge de masse, ces agents étant par exemple des acides gras en C16-C18 (US 5 514 212), ou des polymères hydrophobes à base d'acrylates, d'acrylonitrile et de styrène (WO 01 / 86067).

On peut aussi noter la demande de brevet française déposée sous le numéro 06 08927 mais non encore publiée au jour du dépôt de la présente Demande, et qui décrit l'utilisation en charge de masse d'une suspension aqueuse de carbonate de calcium, dispersée et / ou broyée avec les polymères objets de la présente invention. Ce document ne concerne donc pas la formulation des sauces de couchage, pas plus qu'il ne divulgue l'effet surprenant des polymères de la présente invention, comme agents épaississants desdites sauces. Ce document enseigne toutefois la manière étonnante dont lesdits polymères, en association avec un carbonate de calcium utilisé en charge de masse, permettent de ralentir la pénétration de la sauce dans une feuille de papier en augmentant le degré d'hydrophobicité de ladite feuille.

Par opposition, la présente invention entre dans la catégorie des solutions qui cherchent à ralentir la pénétration de la sauce par une augmentation de sa viscosité. Lorsqu'on augmente ainsi la viscosité de la sauce, on ralentit sa pénétration dans la feuille c'est-à-dire la migration de l'eau et des substances hydrosolubles au sein de la feuille de papier : on parle de "rétention d'eau" améliorée.

A ce titre, il est bien connu d'utiliser comme agents rétenteurs d'eau / épaississants des sauces de couchage, de l'amidon, de l'alcool polyvinylique (PVOH), des polymères à base de carboxyméthylcellulose (CMC), des latex et des émulsions de polymères hautement carboxylés, des polycarboxylates tels que des polyacrylates, ou enfin la classe particulière des polymères gonflables aux alcalis. Ces produits sont notamment décrits dans le document EP 0 509 878, comme objet de l'invention en ce qui concerne les polymères alcali-gonflant, et comme état de la technique pour les autres polymères mentionnés ci-dessus.

D'un point de vue pratique, l'homme du métier met avant tout en oeuvre des épaississants acryliques (tels que le Rheocoat^{™} 35 commercialisé par COATEX^{™} ou le Sterocoll^{™} commercialisé par BASF^{™}) et cellulosiques (tel que le produit Finnfix^{™} commercialisé par BASF™). Les épaississants cellulosiques présentent toutefois l'inconvénient de se présenter sous forme de poudres qui engendrent des problèmes de pollution dans les installation (caractère pulvérulent), de manipulation (difficulté à faire transiter une poudre dans un tuyau), et qui doivent être en général mises en solution aqueuse ce qui représente une étape supplémentaire pour le formulateur. L'homme du métier préfère donc mettre en oeuvre les polymères acryliques, tout en restant sensible aux législations environnementales de plus en plus restrictives, comme indiqué dans les documents WO 2006 / 081501 et EP 0 839 956 : on cherche à réduire la quantité de ces polymères acryliques dans les formulations de couchage.

Cette dernière contrainte s'applique évidemment à l'ensemble des polymères acryliques présents dans la sauce de couchage :
- aux épaississants acryliques évoqués ci-dessus, et qui sont introduits dans la sauce au moment de sa fabrication,
- aux dispersants et aux agents d'aide au broyage de nature acrylique qui ont été mis en oeuvre pendant une étape de dispersion, de broyage, d'addition ou de concentration d'un carbonate de calcium en milieu aqueux, suivie éventuellement par une étape de séchage, la suspension ou la dispersion ou la matière sèche résultante entrant ensuite dans la fabrication de la sauce de couchage.

Le problème technique objectif de la présente Demande peut donc être assimilé à :
- la recherche d'une solution permettant de ralentir la pénétration d'une sauce de couchage dans une feuille de papier couchée à partir de ladite sauce,
- par mise en oeuvre de polymères acryliques préférés aux épaississants cellulosiques sous forme de poudre,
- avec la nécessité de réduire la quantité totale de polymères acryliques (agents épaississants, dispersants et d'aide au broyage) mis en oeuvre dans le procédé global de fabrication de la sauce, comportant à la fois l'étape de fabrication d'une suspension aqueuse de matière minérale, puis l'étape de fabrication de la sauce à partir de la suspension ou de la dispersion ou de la matière minérale sèche précédemment obtenue.

Ce ralentissement de la migration de la sauce au sein de la feuille de papier se traduira par une augmentation de viscosité de ladite sauce et une meilleure rétention d'eau. Il conduira au final à une amélioration des propriétés d'imprimabilité de la feuille de papier couché.

A cet égard, la Demanderesse a mis au point un procédé de fabrication d'une sauce de couchage papetière contenant au moins une matière minérale, **caractérisé:**
- **en ce qu**'il met en oeuvre comme agent épaississant de ladite sauce, un polymère hydrosoluble constitué :
   a) d'au moins un monomère anionique à insaturation éthylénique,
   b) et d'au moins un monomère oxyalkylé à insaturation éthylénique et terminé par une chaîne hydrophobe ramifiée alkyle, alkylaryle, arylalkyle, aryle, saturée ou non, ayant de 14 à 21 atomes de carbone et possédant 2 ramifications ayant au moins 6 atomes de carbone.
- et en ce que ledit polymère est mis en oeuvre par addition directe dans ladite sauce et/ou pendant une étape de dispersion et/ou de broyage et/ou de concentration de la matière minérale dans de l'eau, suivie éventuellement par une étape de séchage.

Par addition directe, on entend que le polymère est ajouté directement dans la sauce de couchage, qui contient déjà la matière minérale. Selon les autres modes d'introduction, on commence par disperser et/ou broyer et/ou concentrer dans l'eau une matière minérale en présence dudit polymère, suivie éventuellement par une étape de séchage, la suspension ou la dispersion aqueuse ou de la matière sèche obtenue entrant ensuite dans la fabrication de la sauce de couchage.

Selon chacun de ces modes, on obtient une diminution de la quantité globale des polymères acryliques mis en oeuvre (agent dispersant, d'aide au broyage et agent épaississant), par rapport à la même sauce ne contenant pas le polymère de l'invention et ce, à performances équivalentes voir améliorées en terme d'épaississement et de rétention d'eau.

Les sauces de couchage résultantes, par rapport aux sauces de couchage de l'art antérieur qui ne contiennent pas ledit polymère :
- présentent alors un effet épaississant plus important (viscosités Brookfield^{™} à 10 et 100 tours par minutes et 25 °C), et une meilleure rétention d'eau, tout en contenant une quantité en poids de polymères acryliques (agents dispersant, de broyage, épaississant) égale à celle contenue dans les sauces de l'art antérieur,
- ou présentent un effet épaississant (viscosités Brookfield^{™} à 10 et 100 tours par minutes et 25 °C) et une rétention d'eau identiques, tout en contenant une quantité en poids de polymères acryliques (agents dispersant, de broyage, épaississant) inférieure à celle contenue dans les sauces de l'art antérieur.

D'autre part, outre le fait de conférer de meilleures propriétés à la sauce finale, ledit polymère permet aussi de réaliser des dispersions et des suspensions aqueuses de matières minérales (lorsqu'il est introduit pendant une étape de dispersion, de broyage, d'addition ou de concentration en milieux aqueux) tout à fait acceptables par l'homme du métier, c'est-à-dire notamment pompables et manipulables. Concrètement, on obtient des dispersions et des suspensions aqueuses par une viscosité Brookfield^{™} à 100 tours par minute et à 25 °C inférieure à 1 000 mPa.s.

Pour expliquer de tels résultats, mais sans pour autant se sentir liée à une quelconque théorie, la Demanderesse pense que le polymère de l'invention est susceptible de développer à la fois des propriétés de stabilisation, de dispersion et de broyage de matières minérales dans l'eau, mais aussi des effets épaississants en présence de latex et ce, via les interactions associatives entre ses groupements hydrophobes R' et les latex contenus dans la sauce de couchage. De telles interactions seraient à l'origine d'un effet d'épaississement induit par le polymère de l'invention.

Ce dernier résultat est d'autant plus surprenant que des polymères de l'acide acrylique avec un monomère de formule (I) et une chaîne latérale R' hydrophobe sont déjà connus, l'homme du métier ayant déjà largement fait varier la longueur de la chaîne R', sans pour autant jamais obtenir un effet épaississant. En effet, tous ces polymères sont décrits comme des agents dispersants de charges minérales : or, ce mécanisme de dispersion est relié à un phénomène de fluidification du milieu, et non pas à l'effet d'épaississement recherché ici par l'homme du métier.

Le document EP 1 294 476 décrit ainsi des polymères avec un monomère anionique comme l'acide acrylique et un monomère de formule (I) dans laquelle R' désigne un radical peu hydrophobe ayant 1 à 5 atomes de carbone ; ces polymères se comportent notamment comme d'excellents agents dispersants du carbonate de calcium.

Le document EP 1 565 504 décrit des copolymères de l'acide acrylique et d'un monomère de formule (I) dans laquelle R' possède de manière très large 1 à 40 atomes de carbone ; ces polymères améliorent l'azuration optique des sauces de couchage, et peuvent être introduits dans les sauces à travers une étape de dispersion du carbonate de calcium. Les documents EP 1 569 970 et EP 1 572 764 décrivent les mêmes structures chimiques, mais mises en oeuvre respectivement comme agent d'aide au broyage et comme agent améliorant la brillance d'un papier couché.

Le document WO 2007 / 069037 dévoile que des polymères de l'acide acrylique et d'un monomère de formule (I) dans laquelle R' possède 1 à 40 atomes de carbone mais est préférentiellement le groupe méthyle, permettent d'améliorer constamment la rétention d'eau d'une sauce de couchage, tout en maintenant sa viscosité à un niveau relativement bas.

Enfin, les documents EP 0 892 020 et EP 0 892 111 enseignent que le choix particulier pour R' d'un radical hydrophobe ayant au moins 22 atomes de carbone permet pour des polymères de l'acide acrylique et d'un monomère de formule (I) de disperser ou de broyer efficacement dans l'eau des matières minérales tant hydrophiles (carbonate de calcium) qu'hydrophobes (talc).

Par conséquent, l'art antérieur avait déjà envisagé de nombreuses possibilités pour le groupement R' : chacune d'entre elles conduisait clairement à un polymère du type dispersant, d'aide au broyage ou à des fins d'amélioration de brillance ou encore de l'azuration optique, et non pas à un épaississant de sauce de couchage papetière. Un des mérites de la Demanderesse est d'avoir imaginé initialement que le choix d'un groupement R' différent conduirait à un effet d'épaississement.

Un autre de ses mérites est d'avoir su ensuite identifier de tels groupements R', à travers le choix très particulier d'une chaîne hydrophobe ramifiée ayant de 14 à 21 atomes de carbone et possédant 2 ramifications ayant au moins 6 atomes de carbone. Rien ne dévoilait ou ne suggérait un tel choix ; rien ne laissait augurer qu'un tel choix eut pu conduire à un effet technique aussi remarquable : la diminution de la quantité de polymères acryliques dans la sauce de couchage, pour une performance épaississante équivalente à l'art antérieur.

Aussi, un premier objet de l'invention consiste en un procédé de fabrication d'une sauce de couchage papetière contenant au moins une matière minérale, caractérisé :
- en ce qu'il met en oeuvre comme agent épaississant de ladite sauce, un polymère hydrosoluble constitué :
   a) d'au moins un monomère anionique à insaturation éthylénique,
   b) et d'au moins un monomère oxyalkylé à insaturation éthylénique et terminé par une chaîne hydrophobe ramifiée alkyle, alkylaryle, arylalkyle, aryle, saturée ou non, ayant de 14 à 21, de préférence de 15 à 20 atomes de carbone et possédant 2 ramifications ayant au moins 6 atomes de carbone,
- et en ce que ledit polymère est mis en oeuvre par addition directe dans ladite sauce et/ou pendant une étape de dispersion et/ou de broyage et/ou de concentration de la matière minérale dans de l'eau, suivi éventuellement par une étape de séchage.

Ce procédé est aussi caractérisé en ce que ledit polymère comporte, exprimé en pourcentage en poids de chacun des monomères (le total de ces pourcentages étant égal à 100%):
a) de 5 % à 95 %, préférentiellement de 50 % à 95 %, très préférentiellement de 70 % à 95 % d'au moins un monomère anionique à insaturation éthylénique,
b) de 5 % à 95 %, préférentiellement de 5 % à 50 %, très préférentiellement de 5 % à 30 % et d'au moins un monomère oxyalkylé à insaturation éthylénique et terminé par une chaîne hydrophobe ramifiée alkyle, alkylaryle, arylalkyle, aryle, saturée ou non, ayant de 14 à 21, de préférence de 15 à 20, atomes de carbone et possédant 2 ramifications ayant au moins 6 atomes de carbone.

Ce procédé est aussi caractérisé en ce que le monomère a) est choisi parmi l'acide acrylique, l'acide méthacrylique et leurs mélanges.

Ce procédé est aussi caractérisé en ce que le monomère b) est un monomère de formule (I) : 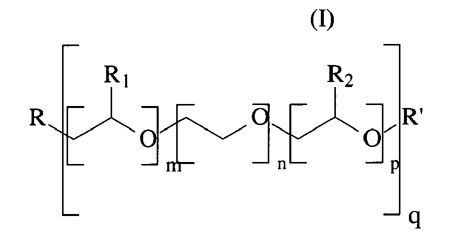 où :
- m, n, p et q sont des entiers et m, n, p sont inférieurs à 150, q est supérieur à 0 et au moins un entier parmi m, n et p est non nul,
- R est un radical comportant une fonction insaturée polymérisable, appartenant préférentiellement au groupe des vinyliques ainsi qu'au groupe des esters acryliques, méthacryliques, maléiques, ainsi qu'au groupe des insaturés uréthannes tels que les acryluréthannes, méthacryluréthannes, α-α' diméthyl-isopropényl-benzyluréthannes, allyluréthannes, de même qu'au groupe des éthers allyliques ou vinyliques substitués ou non, ou encore au groupe des amides ou des imides éthyléniquement insaturées,
- R₁ et R₂ sont identiques ou différents et représentent des atomes d'hydrogène ou des groupements alkyls,
- R' représente une chaîne hydrophobe ramifiée alkyle, alkylaryle, arylalkyle, aryle, saturée ou non, ayant de 14 à 21, préférentiellement de 15 à 20 atomes de carbone et possédant 2 ramifications ayant au moins 6 atomes de carbone, et en ce que R' est de manière extrêmement préférentielle choisi parmi le 2-hexyl 1-decanyle, le 2-octyl 1-dodecanyle et leurs mélanges.

Ce procédé est aussi caractérisé en ce que ledit polymère hydrosoluble est partiellement ou totalement neutralisé par un ou plusieurs agents de neutralisation disposant d'une fonction monovalente ou d'une fonction polyvalente, choisis préférentiellement parmi les hydroxydes de sodium et de potassium et leurs mélanges.

Ce procédé est aussi caractérisé en ce que la matière minérale est choisie parmi le carbonate de calcium naturel ou synthétique, le kaolin, le talc, et leurs mélanges et en ce qu'elle est préférentiellement un carbonate de calcium naturel ou synthétique ou un kaolin ou leurs mélanges, et en ce qu'elle est très préférentiellement un mélange de carbonate de calcium naturel et de kaolin.

Ce procédé est aussi caractérisé en ce qu'il met en oeuvre de 0,1 % à 2 %, préférentiellement de 0,2 % à 0,8 % en poids sec dudit polymère, par rapport au poids sec de matière minérale.

Un deuxième objet de l'invention consiste en une sauce de couchage papetière contenant au moins une matière minérale, et caractérisée en ce qu'elle contient, comme agent épaississant, un polymère hydrosoluble constitué :
a) d'au moins un monomère anionique à insaturation éthylénique,
b) et d'au moins un monomère oxyalkylé à insaturation éthylénique et terminé par une chaîne hydrophobe ramifiée alkyle, alkylaryle, arylalkyle, aryle, saturé ou non, ayant de 14 à 21, de préférence de 15 à 20, atomes de carbone et possédant 2 ramifications ayant au moins 6 atomes de carbone.

Cette sauce de couchage est aussi caractérisée en ce que ledit polymère comporte, exprimé en pourcentage en poids de chacun des monomères (le total de ces pourcentages étant égal à 100 %) :
a) de 5 % à 95 %, préférentiellement de 50 % à 95 %, très préférentiellement de 70 % à 95 % d'au moins un monomère anionique à insaturation éthylénique,
b) de 5 % à 95 %, préférentiellement de 5 % à 50 %, très préférentiellement de 5 % à 30 % et d'au moins un monomère oxyalkylé à insaturation éthylénique et terminé par une chaîne hydrophobe ramifiée alkyle, alkylaryle, arylalkyle, aryle, saturé ou non, ayant de 14 à 21, de préférence de 15 à 20, atomes de carbone et possédant 2 ramifications ayant au moins 6 atomes de carbone.

Cette sauce de couchage est aussi caractérisée en ce que le monomère a) est choisi parmi l'acide acrylique, l'acide méthacrylique et leurs mélanges.

Cette sauce de couchage est aussi caractérisée en ce que le monomère b) est un monomère de formule (I) : 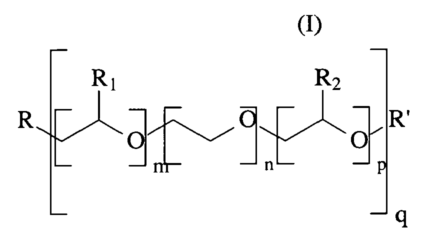 où:
- m, n, p et q sont des entiers et m, n, p sont inférieurs à 150, q est supérieur à 0 et au moins un entier parmi m, n et p est non nul,
- R est un radical comportant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R₁ et R₂ sont identiques ou différents et représentent des atomes d'hydrogène ou des groupements alkyls,
- R' représente une chaîne hydrophobe ramifiée alkyle, alkylaryle, arylalkyle, aryle saturée ou non, ayant de 14 à 24, préférentiellement de 15 à 20 atomes de carbone et possédant 2 ramifications ayant au moins 6 atomes de carbone, et en ce que R' est de manière extrêmement préférentielle choisi parmi le 2-hexyl 1-decanyle, le 2-octyl 1-dodecanyle et leurs mélanges.

Cette sauce de couchage est aussi caractérisée en ce que ledit polymère hydrosoluble est partiellement ou totalement neutralisé par un ou plusieurs agents de neutralisation disposant d'une fonction monovalente ou d'une fonction polyvalente, choisis préférentiellement parmi les hydroxydes de sodium et de potassium et leurs mélanges.

Cette sauce de couchage est aussi caractérisée en ce que la matière minérale est choisie parmi le carbonate de calcium naturel ou synthétique, le kaolin, le talc, et leurs mélanges et en ce qu'elle est préférentiellement un carbonate de calcium naturel ou synthétique ou un kaolin ou leurs mélanges, et en ce qu'elle est très préférentiellement un mélange de carbonate de calcium naturel et de kaolin.

Cette sauce de couchage est aussi caractérisée en ce qu'elle contient de 0,1 % à 2 %, préférentiellement de 0,2 % à 0,8 % en poids sec dudit polymère, par rapport au poids sec de matière minérale.

### EXEMPLES

### Exemple 1

Cet essai illustre le procédé selon l'invention, dans lequel on met en oeuvre le polymère de l'invention dans une suspension aqueuse de carbonate de calcium, pendant une étape d'addition ou de broyage. Ces suspensions entrent ensuite dans la fabrication de sauces de couchage qui présentent une rétention d'eau et un épaississement améliorés, par rapport à une sauce de couchage de l'art antérieur issue d'une suspension aqueuse de carbonate de calcium sans le polymère de l'invention, les 2 sauces présentant au final la même quantité de polymère acrylique (agent dispersant ou d'aide au broyage introduit dans la suspension aqueuse + agent épaississant introduit dans la sauce).

### Essai n° 1

Cet essai illustre l'art antérieur, et met en oeuvre, par addition dans une suspension aqueuse réalisée à partir d'un carbonate de calcium (marbre de Norvège) commercialisé par la société OMYA^{™} sous le nom Setacarb^{™} ME, 0,2 % en poids sec par rapport au poids sec dudit carbonate d'un homopolymère de l'acide acrylique :
- dont 70 % en mole des sites carboxyliques sont neutralisés par la soude et 30 % en mole des sites carboxyliques sont neutralisés par la chaux,
- et de poids moléculaire égal à 5 500 g/mole (tel que déterminé selon la méthode décrite dans le document WO 2007 / 069037).

On obtient alors une suspension aqueuse dont la teneur en poids sec de carbonate de calcium est égale à 74,2 % de son poids total, et dont la viscosité Brookfield^{™} mesurée à 100 tours par minute est inférieure à 1 000 mPa.s, ce qui la rend tout à fait manipulable par l'utilisateur.

### Essai n° 1 bis

Cet essai illustre l'invention, et met en oeuvre, par addition dans une suspension aqueuse réalisée à partir d'un carbonate de calcium (marbre de Norvège) commercialisé par la société OMYA^{™} sous le nom Setacarb^{™} ME, 0,2 % en poids sec par rapport au poids sec dudit carbonate d'un polymère hydrosoluble totalement neutralisé par la soude et constitué de :
a) 75 % en poids d'acide acrylique,
b) 25 % en poids du monomère de formule (I) dans lequel :
   - R représente un radical méthacrylate,
   - R' représente une chaîne hydrophobe linéaire à 16 atomes de carbone de carbone 2-hexyl 1-decanyle,
   - m = p = 0, q = 1, n = 25.

On obtient alors une suspension aqueuse comparable à celle obtenue pour l'essai n° 1, puisque sa teneur en poids sec de carbonate de calcium est égale à 74,1 % de son poids total, et que sa viscosité Brookfield^{™} mesurée à 100 tours par minute est inférieure à 1 000 mPa.s, ce qui la rend tout à fait manipulable par l'utilisateur.

### Essai n° 2

Cet essai illustre l'art antérieur, et met en oeuvre, par addition dans une suspension aqueuse réalisée à partir d'un carbonate de calcium (marbre de Norvège) commercialisé par la société OMYA^{™} sous le nom H90™ ME, 0,2 % en poids sec par rapport au poids sec dudit carbonate d'un homopolymère de l'acide acrylique :
- dont 70 % en mole des sites carboxyliques sont neutralisés par la soude et 30 % en mole des sites carboxyliques sont neutralisés par la chaux,
- et de poids moléculaire égal à 5 500 g/mole (tel que déterminé selon la méthode décrite dans le document WO 2007 / 069037).

On obtient alors une suspension aqueuse dont la teneur en poids sec de carbonate de calcium est égale à 77,1 % de son poids total, et dont la viscosité Brookfield^{™} mesurée à 100 tours par minute est supérieure à 1 500 mPa.s, ce qui la rend difficilement manipulable et notamment peu pompable.

### Essai n° 2 bis

Cet essai illustre l'invention, et met en oeuvre, par addition dans une suspension aqueuse réalisée à partir d'un carbonate de calcium (marbre de Norvège) commercialisé par la société OMYA^{™} sous le nom de H90™ ME, 0,2 % en poids sec par rapport au poids sec dudit carbonate d'un polymère hydrosoluble totalement neutralisé par la soude et constitué de :
a) 75 % en poids d'acide acrylique,
b) 25 % en poids du monomère de formule (I) dans lequel :
   - R représente un radical méthacrylate,
   - R' représente une chaîne hydrophobe linéaire à 16 atomes de carbone de carbone 2-hexyl 1-decanyle,
   - m = p = 0, q = 1, n = 25.

On obtient alors une suspension aqueuse comparable à celle obtenue pour l'essai n° 2, au niveau de sa teneur en poids sec de carbonate de calcium qui est égale à 77,4 % de son poids total. En revanche, sa viscosité Brookfield^{™} mesurée à 100 tours par minute est inférieure à 1 000 mPa.s, ce qui la rend tout à fait manipulable par l'utilisateur, contrairement à la suspension obtenue pour l'essai n° 2.

### Essai n° 3

Cet essai illustre l'art antérieur, et met en oeuvre pendant une étape de broyage d'un carbonate de calcium (calcite française) dont le diamètre tel que 50 % en poids des particules ont un diamètre supérieur à cette valeur est égal à 6,7 µm, 1 % en poids sec par rapport au poids sec dudit carbonate d'un homopolymère de l'acide acrylique :
- dont 70 % en mole des sites carboxyliques sont neutralisés par la soude et 30 % en mole des sites carboxyliques sont neutralisés par la chaux,
- et de poids moléculaire égal à 5 500 g/mole (tel que déterminé selon la méthode décrite dans le document WO 2007 / 069037).

On obtient alors une suspension aqueuse dont la teneur en poids sec de carbonate de calcium est égale à 71,7 % de son poids total, dont 58,9 % et 88,5 % en poids des particules sont respectivement inférieur à 1 µm et 2 µm, et dont la viscosité Brookfield^{™} mesurée à 100 tours par minute est inférieure à 1 000 mPa.s, ce qui la rend tout à fait manipulable par l'utilisateur.

### Essai n° 3 bis

Cet essai illustre l'invention, et met en oeuvre pendant une étape de broyage d'un carbonate de calcium (calcite française) dont le diamètre tel que 50 % en poids des particules ont un diamètre supérieur à cette valeur est égal à 6,7 µm, 1 % en poids sec par rapport au poids sec dudit carbonate d'un polymère hydrosoluble totalement neutralisé par la soude et constitué de :
a) 75 % en poids d'acide acrylique,
b) 25 % en poids du monomère de formule (I) dans lequel :
   - R représente un radical méthacrylate,
   - R' représente une chaîne hydrophobe linéaire à 16 atomes de carbone de carbone 2-hexyl 1-decanyle,
   - m = p = 0, q = 1, n = 25.

On obtient alors une suspension aqueuse comparable à celle obtenue pour l'essai n° 3, puisque sa teneur en poids sec de carbonate de calcium est égale à 71,4 % de son poids total, qu'elle présente 57,8 % et 87,4 % en poids des particules sont respectivement inférieur à 1 µm et 2 µm ; de plus, sa viscosité Brookfield^{™} mesurée à 100 tours par minute est inférieure à 1 000 mPa.s, ce qui la rend tout à fait manipulable par l'utilisateur.

Pour les essais n° 3 et 3 bis, le broyage est réalisé selon la méthode décrite dans le document WO 01 / 96007.

Pour chacun des essais n° 1 à 3 bis, on réalise ensuite une sauce de couchage papetière, composée de :
- 100 parts en poids sec de la suspension aqueuse de carbonate de calcium à tester
- 11 parts en poids sec de latex styrène-butadiène commercialisé par la société DOW™ CHEMICALS sous le nom de DL 966, pour 100 parts en poids sec de carbonate de calcium,
- 0,25 part en poids sec d'alcool polyvinylique, pour 100 parts en poids sec de carbonate de calcium,
- 0,6 part en poids sec d'un azurant optique commercialisé par la société CLARIANT^{™} sous le nom Blancophor^{™} P, pour 100 parts en poids sec de carbonate de calcium,
- 0,4 part en poids sec d'un épaississant / rétenteur d'eau acrylique commercialisé par la société COATEX^{™} sous le nom Rheocarb^{™}.

Pour chacun des sauces obtenues à partir des essais 1 à 3 bis, on détermine ensuite ses viscosités Brookfield^{™} à 10 et 100 tours par minute et à 25 °C, et sa rétention d'eau.
Cette dernière est déterminée grâce à un appareil du type AAGWR commercialisé par la société GRADEK^{™}. Il est constitué d'une chambre de mesure dans laquelle on dispose un papier test dénommé "Test Blotter Paper", recouvert par un toile plastique perforée dénommée "Test Filter PCTE", le papier et la toile étant commercialisés par la société GRADEK^{™}.
On introduit ensuite dans la chambre 10 ml de la sauce de couchage à tester.

L'appareil AAGWR permet d'exercer une certaine pression sur la sauce de couchage, conduisant tout ou partie de l'eau et des substances hydrosolubles contenues dans la sauce à traverser la toile plastique perforée et à migrer dans le papier test.
Concrètement, on applique une pression de 0,5 bar pendant 90 secondes.
La différence entre le poids du papier test avant et après l'expérience, donne le poids d'eau et des substances hydrosolubles contenues dans sauce de couchage et qui ont migré dans le papier test au cours de l'expérience.

L'ensemble des résultats obtenus pour les essais n° 1 à 3 bis figure dans le tableau 1.

**Tableau 1**

| Essai n° | 1 | 1 bis | 2 | 2 bis | 3 | 3 bis |
|---|---|---|---|---|---|---|
| Art Antérieur (AA) Invention (IN) | AA | IN | AA | IN | AA | IN |
| µ10 (mPa.s) | 4280 | 4360 | 2880 | 3560 | 1400 | 5660 |
| µ100 (mPa.s) | 860 | 960 | 620 | 890 | 415 | 1450 |
| AA GWR (g/m2) | 249 | 203 | 92 | 82 | 106 | 67 |

Si on compare les résultats 2 à 2, on observe que les viscosités Brookfield^{™} sont systématiquement supérieures dans le cas de l'invention ; ceci est d'autant plus remarquable pour l'essai n° 2 bis, pour lequel la suspension initiale était bien plus fluide que celle correspondant à l'essai n° 2.
De même, la rétention d'eau est toujours largement inférieure dans le cas de l'invention, ce qui signifie que la sauce de couchage a moins migré à travers le papier support.
L' imprimabilité du papier résultant sera donc améliorée et ce, pour une quantité égale de polymère acrylique (agent dispersant ou de broyage pendant la fabrication de la suspension aqueuse, et agent épaississant pour la fabrication de la sauce de couchage), égale à celle mise en oeuvre dans l'art.

### Exemple 2

Cet essai illustre le procédé selon l'invention dans lequel on met en oeuvre le polymère de l'invention dans une suspension aqueuse de carbonate de calcium, pendant une étape de dispersion ou pendant une étape de concentration. Ces suspensions entrent ensuite dans la fabrication de sauces de couchage qui présentent une rétention d'eau et un épaississement améliorés, par rapport à une sauce de couchage de l'art antérieur issue d'une suspension aqueuse de carbonate de calcium sans le polymère de l'invention, les 2 sauces présentant au final la même quantité de polymère acrylique (agent dispersant ou d'aide au broyage introduit dans la suspension aqueuse + agent épaississant introduit dans la sauce).

### Essai n° 4

Cet essai illustre l'art antérieur, et met en oeuvre, en vue de disperser dans l'eau un gâteau de carbonate de calcium (marbre de Norvège) broyé sans agent d'aide au broyage et dont 60 % en poids des particules ont un diamètre médian inférieur à 1 µm, 0,4 % en poids sec par rapport au poids sec dudit carbonate d'un copolymère de l'acide acrylique et de l'anhydride maléique (dans un ratio massique 70 / 30) :
- totalement neutralisé par la soude,
- et de poids moléculaire égal à 15 600 g/mole (tel que déterminé selon la méthode décrite dans le document WO 2007 / 069037).

On obtient alors une suspension aqueuse dont la teneur en poids sec de carbonate de calcium est égale à 67,4 % de son poids total, et dont la viscosité Brookfield^{™} mesurée à 100 tours par minute est inférieure à 1 000 mPa.s, ce qui la rend tout à fait manipulable par l'utilisateur.

### Essai n° 4 bis

Cet essai illustre l'invention, et met en oeuvre, en vue de disperser un carbonate de calcium (marbre de Norvège) dans l'eau, 0,4 % en poids sec par rapport au poids sec dudit carbonate d'un polymère hydrosoluble constitué de :
a) 75 % en poids d'acide acrylique,
b) 25 % en poids du monomère de formule (I) dans lequel :
   - R représente un radical méthacrylate,
   - R' représente une chaîne hydrophobe linéaire à 16 atomes de carbone de carbone 2-hexyl 1-decanyle,
   - m = p = 0, q = 1, n = 25.

On obtient alors une suspension aqueuse comparable à celle obtenue pour l'essai n° 4, puisque sa teneur en poids sec de carbonate de calcium est égale à 67,0 % de son poids total, et que sa viscosité Brookfield^{™} mesurée à 100 tours par minute est inférieure à 1 000 mPa.s, ce qui la rend tout à fait manipulable par l'utilisateur.

### Essai n° 5

Cet essai illustre l'art antérieur, et met en oeuvre pendant une étape de concentration d'une suspension aqueuse de carbonate de calcium (marbre de Finlande) ayant un extrait sec initial de 20 %, 0,8 % en poids sec par rapport au poids sec dudit carbonate d'un copolymère de l'acide acrylique et de l'anhydride maléique (dans un ratio massique 70 / 30):
- totalement neutralisé par la soude,
- et de poids moléculaire égal à 15 600 g/mole (tel que déterminé selon la méthode décrite dans le document WO 2007 / 069037).

On obtient alors une suspension aqueuse dont la teneur en poids sec de carbonate de calcium est égale à 71,5 % de son poids total, et dont la viscosité Brookfield^{™} mesurée à 100 tours par minute est inférieure à 1 000 mPa.s, ce qui la rend tout à fait manipulable par l'utilisateur.

### Essai n° 5 bis

Cet essai illustre l'invention, et met en oeuvre pendant une étape de concentration d'une suspension aqueuse de carbonate de calcium (marbre de Finlande) ayant un extrait sec initial de 20 %, 0,8 % en poids sec par rapport au poids sec dudit carbonate d'un polymère hydrosoluble totalement neutralisé par la soude et constitué de :
a) 75 % en poids d'acide acrylique,
b) 25 % en poids du monomère de formule (I) dans lequel :
   - R représente un radical méthacrylate,
   - R' représente une chaîne hydrophobe linéaire à 16 atomes de carbone de carbone 2-hexyl 1-decanyle,
   - m = p = 0, q = 1, n = 25.

On obtient alors une suspension aqueuse comparable à celle obtenue pour l'essai n° 2, au niveau de sa teneur en poids sec de carbonate de calcium qui est égale à 71,4 % de son poids total. En revanche, sa viscosité Brookfield^{™} mesurée à 100 tours par minute est inférieure à 1 000 mPa.s, ce qui la rend tout à fait manipulable par l'utilisateur, contrairement à la suspension obtenue pour l'essai n° 2.

Pour les essais n° 5 et 5 bis, la concentration est réalisée selon la méthode bien connue de l'homme du métier, au moyen d'un concentrateur thermique commercialisé par la société EPCOM^{™}.

Pour chacun des essais n° 4 à 5 bis, on réalise ensuite une sauce de couchage papetière, composée de :
- 70 parts en poids sec de la suspension aqueuse de carbonate de calcium à tester,
- 30 parts en poids sec d'un kaolin en poudre commercialisé par la société HUBER^{™} sous le nom Hydragloss^{™} 90,
- 11 parts en poids sec de latex styrène-butadiène commercialisé par la société DOW™ CHEMICALS sous le nom de DL 966, pour 100 parts en poids sec de carbonate de calcium,
- 1 part en poids sec d'alcool polyvinylique, pour 100 parts en poids sec de carbonate de calcium,
- 1 part en poids sec d'un azurant optique commercialisé par la société CLARIANT^{™} sous le nom Blancophor^{™} P, pour 100 parts en poids sec de carbonate de calcium,
- 0,8 part en poids sec d'un épaississant / rétenteur d'eau acrylique commercialisé par la société COATEX^{™} sous le nom Rheocarb^{™}.

Pour chacun des sauces obtenues à partir des essais 4 à 5 bis, on détermine ensuite ses viscosités Brookfield^{™} à 10 et 100 tours par minute et à 25 °C, et sa rétention d'eau.

L'ensemble des résultats obtenus figure dans le tableau 2.

**Tableau 2**

| Essai n° | 4 | 4 bis | 5 | 5 bis |
|---|---|---|---|---|
| Art Antérieur (AA) Invention (IN) | AA | IN | AA | IN |
| µ10 (mPa.s) | 1880 | 3000 | 1280 | 3480 |
| µ100 (mPa.s) | 455 | 660 | 320 | 830 |
| AA GWR (g/m2) | 130 | 118 | 199 | 123 |

Si on compare les résultats 2 à 2, on observe que les viscosités Brookfield^{™} sont systématiquement supérieures et que la rétention d'eau est toujours largement inférieure dans le cas de l'invention, ce qui signifie que la sauce de couchage a moins migré à travers le papier support.
L' imprimabilité du papier résultant sera donc améliorée et ce, pour une quantité égale de polymère acrylique (agent dispersant ou de broyage pendant la fabrication de la suspension aqueuse, et agent épaississant pour la fabrication de la sauce de couchage), égale à celle mise en oeuvre dans l'art.

### Exemple 3

Cet essai illustre le procédé selon l'invention dans lequel on met en oeuvre le polymère de l'invention dans une suspension aqueuse de carbonate de calcium, pendant une étape de broyage. Ces suspensions entrent ensuite dans la fabrication de sauces de couchage qui présentent une rétention d'eau et un épaississement améliorés, par rapport à une sauce de couchage de l'art antérieur issue d'une suspension aqueuse de carbonate de calcium sans le polymère de l'invention, les 2 sauces présentant au final la même quantité de polymère acrylique (agent dispersant ou d'aide au broyage introduit dans la suspension aqueuse + agent épaississant introduit dans la sauce).

### Essai n° 6

Cet essai illustre l'art antérieur, et met en oeuvre, en vue de broyer dans l'eau un carbonate de calcium (craie française) dont le diamètre tel que 50 % en poids des particules ont un diamètre supérieur à cette valeur est égal à 2,4 µm, 0,45 % en poids sec par rapport au poids sec dudit carbonate d'un homopolymère de l'acide acrylique :
- dont 70 % en mole des sites carboxyliques sont neutralisés par la soude et 30 % en mole des sites carboxyliques sont neutralisés par la chaux,
- et de poids moléculaire égal à 5 500 g/mole (tel que déterminé selon la méthode décrite dans le document WO 2007 / 069037).

On obtient alors une suspension aqueuse dont la teneur en poids sec de carbonate de calcium est égale à 73,9 % de son poids total, dont 39,6 % et 76,7 % en poids des particules sont respectivement inférieur à 1 µm et 2 µm, et dont la viscosité Brookfield^{™} mesurée à 100 tours par minute est inférieure à 1 000 mPa.s, ce qui la rend tout à fait manipulable par l'utilisateur.

### Essai n° 6 bis

Cet essai illustre l'invention, et met en oeuvre, en vue de broyer dans l'eau un carbonate de calcium (craie française) dont le diamètre tel que 50 % en poids des particules ont un diamètre supérieur à cette valeur est égal à 2,4 µm, 0,45 % en poids sec par rapport au poids sec dudit carbonate d'un polymère hydrosoluble constitué de :
a) 75 % en poids d'acide acrylique,
b) 25 % en poids du monomère de formule (I) dans lequel :
   - R représente un radical méthacrylate,
   - R' représente une chaîne hydrophobe linéaire à 16 atomes de carbone de carbone 2-hexyl 1-decanyle,
   - m = p = 0, q = 1, n = 25.

On obtient alors une suspension aqueuse comparable à celle obtenue pour l'essai n° 6, dont la teneur en poids sec de carbonate de calcium est égale à 73,5 % de son poids total, dont 37,8 % et 75,8 % en poids des particules sont respectivement inférieur à 1 µm et 2 µm, et dont la viscosité Brookfield^{™} mesurée à 100 tours par minute est inférieure à 1 000 mPa.s, ce qui la rend tout à fait manipulable par l'utilisateur.

Pour chacun des essais n° 6 et 6 bis, on réalise ensuite une sauce de couchage papetière, composée de :
- 100 parts en poids sec de la suspension aqueuse de carbonate de calcium à tester,
- 8 parts en poids sec de latex styrène-butadiène commercialisé par la société DOW™ CHEMICALS sous le nom de DL 966, pour 100 parts en poids sec de carbonate de calcium,
- 4 parts en poids sec d'amidon commercialisé par la société ROQUETTE^{™} sous le nom Amilys^{™},
- 1,5 part en poids sec d'un azurant optique commercialisé par la société CLARIANT^{™} sous le nom Blancophor^{™} P, pour 100 parts en poids sec de carbonate de calcium,
- 0,3 part en poids sec d'un épaississant / rétenteur d'eau acrylique commercialisé par la société COATEX^{™} sous le nom Rheocarb^{™}.

Pour chacune des sauces obtenues à partir des essais 6 et 6 bis, on détermine ensuite ses viscosités Brookfield^{™} à 10 et 100 tours par minute et à 25 °C, et sa rétention d'eau.
Les résultats obtenus figurent dans le tableau 3.

**Tableau 3**

| Essai n° | 6 | 6 bis |
|---|---|---|
| Art Antérieur (AA) Invention (IN) | AA | IN |
| µ10 (mPa.s) | 1760 | 5440 |
| µ100 (mPa.s) | 380 | 1000 |
| AA GWR (g/m2) | 136 | 86 |

Si on compare les résultats, on observe que les viscosités Brookfield^{™} sont systématiquement supérieures et que la rétention d'eau est toujours largement inférieure dans le cas de l'invention, ce qui signifie que la sauce de couchage a moins migré à travers le papier support.
L' imprimabilité du papier résultant sera donc améliorée et ce, pour une quantité égale de polymère acrylique (agent dispersant ou de broyage pendant la fabrication de la suspension aqueuse, et agent épaississant pour la fabrication de la sauce de couchage), égale à celle mise en oeuvre dans l'art.

## Revendications

1. - Procédé de fabrication d'une sauce de couchage papetière contenant au moins une matière minérale, **caractérisé :**
- **en ce qu**'il met en oeuvre comme agent épaississant de ladite sauce, un polymère hydrosoluble constitué :
a) d'au moins un monomère anionique à insaturation éthylénique,
b) et d'au moins un monomère oxyalkylé à insaturation éthylénique et terminé par une chaîne hydrophobe ramifiée alkyle, alkylaryle, arylalkyle, aryle, saturée ou non, ayant de 14 à 21, de préférence de 15 à 20, atomes de carbone et possédant 2 ramifications ayant au moins 6 atomes de carbone,
- et en ce que ledit polymère est mis en oeuvre par addition directe dans ladite sauce et/ou pendant une étape de dispersion et/ou de broyage et/ou de concentration de la matière minérale dans de l'eau, suivie éventuellement par une étape de séchage.

2. - Procédé selon la revendication 1, **caractérisé en ce que** ledit polymère comporte, exprimé en pourcentage en poids de chacun des monomères (le total de ces pourcentages étant égal à 100 %) :
a) de 5 % à 95 %, préférentiellement de 50 % à 95 %, très préférentiellement de 70 % à 95 % d'au moins un monomère anionique à insaturation éthylénique,
b) de 5 % à 95 %, préférentiellement de 5 % à 50 %, très préférentiellement de 5 % à 30 % et d'au moins un monomère oxyalkylé à insaturation éthylénique et terminé par une chaîne hydrophobe ramifiée alkyle, alkylaryle, arylalkyle, aryle, saturée ou non, ayant de 14 à 21, de préférence de 15 à 20, atomes de carbone et possédant 2 ramifications ayant au moins 6 atomes de carbone.

3. - Procédé selon l'une des revendications 1 ou 2, **caractérisé en ce que** le monomère a) est choisi parmi l'acide acrylique, l'acide méthacrylique et leurs mélanges.

4. - Procédé selon l'une des revendications 1 à 3, **caractérisé en ce que** le monomère b) est un monomère de formule (I) : 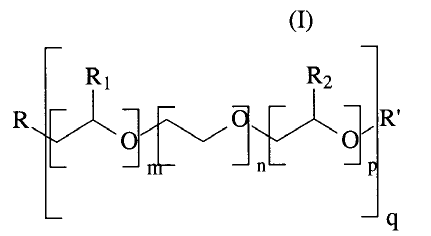 où :
- m, n, p et q sont des entiers et m, n, p sont inférieurs à 150, q est supérieur à 0 et au moins un entier parmi m, n et p est non nul,
- R est un radical comportant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R₁ et R₂ sont identiques ou différents et représentent des atomes d'hydrogène ou des groupements alkyls,
- R' représente une chaîne hydrophobe ramifiée alkyle, alkylaryle, arylalkyle, aryle saturée ou non, ayant de 14 à 24, préférentiellement de 15 à 20, atomes de carbone et possédant 2 ramifications ayant au moins 6 atomes de carbone, et **en ce que** R' est de manière extrêmement préférentielle choisi parmi le 2-hexyl 1-decanyle, le 2-octyl 1-dodecanyle et leurs mélanges.

5. - Procédé selon l'une des revendications 1 à 4, **caractérisé en ce que** ledit polymère hydrosoluble est partiellement ou totalement neutralisé par un ou plusieurs agents de neutralisation disposant d'une fonction monovalente ou d'une fonction polyvalente, choisis préférentiellement parmi les hydroxydes de sodium et de potassium et leurs mélanges.

6. - Procédé selon l'une des revendications 1 à 5, **caractérisé en ce que** la matière minérale est choisie parmi le carbonate de calcium naturel ou synthétique, le kaolin, le talc, et leurs mélanges et **en ce qu'**elle est préférentiellement un carbonate de calcium naturel ou synthétique ou un kaolin ou leurs mélanges, et **en ce qu'**elle est très préférentiellement un mélange de carbonate de calcium naturel et de kaolin.

7. - Procédé selon l'une des revendications 1 à 6, **caractérisé en ce qu'**il met en oeuvre de 0,1 % à 2 %, préférentiellement de 0,2 % à 0,8 % en poids sec dudit polymère, par rapport au pois sec de matière minérale.

8. - Sauce de couchage papetière contenant au moins une matière minérale, et **caractérisée en ce qu'**elle contient, comme agent épaississant, un polymère hydrosoluble constitué :
a) d'au moins un monomère anionique à insaturation éthylénique,
b) et d'au moins un monomère oxyalkylé à insaturation éthylénique et terminé par une chaîne hydrophobe ramifiée alkyle, alkylaryle, arylalkyle, aryle, saturée ou non, ayant de 14 à 21, de préférence de 15 à 20, atomes de carbone et possédant 2 ramifications ayant au moins 6 atomes de carbone.

9. - Sauce de couchage selon la revendication 8, **caractérisée en ce que** ledit polymère comporte, exprimé en pourcentage en poids de chacun des monomères (le total de ces pourcentages étant égal à 100 %) :
a) de 5 % à 95 %, préférentiellement de 50 % à 95 %, très préférentiellement de 70 % à 95 % d'au moins un monomère anionique à insaturation éthylénique,
b) de 5 % à 95 %, préférentiellement de 5 % à 50 %, très préférentiellement de 5 % à 30 % et d'au moins un monomère oxyalkylé à insaturation éthylénique et terminé par une chaîne hydrophobe ramifiée alkyle, alkylaryle, arylalkyle, aryle, saturée ou non, ayant de 14 à 21, de préférence de 15 à 20, atomes de carbone et possédant 2 ramifications ayant au moins 6 atomes de carbone.

10. - Sauce de couchage selon l'une des revendications 8 ou 9, **caractérisée en ce que** le monomère a) est choisi parmi l'acide acrylique, l'acide méthacrylique et leurs mélanges.

11. - Sauce de couchage selon l'une des revendications 8 à 10, **caractérisée en ce que** le monomère b) est un monomère de formule (I) : 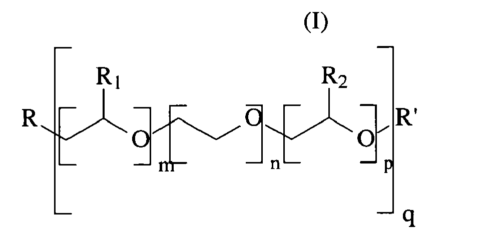 où :
- m, n, p et q sont des entiers et m, n, p sont inférieurs à 150, q est supérieur à 0 et au moins un entier parmi m, n et p est non nul,
- R est un radical comportant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R₁ et R₂ sont identiques ou différents et représentent des atomes d'hydrogène ou des groupements alkyls,
- R' représente une chaîne hydrophobe ramifiée alkyle, alkylaryle, arylalkyle, aryle, saturée ou non, ayant de 14 à 21, préférentiellement de 15 à 20, atomes de carbone et possédant 2 ramifications ayant au moins 6 atomes de carbone, et **en ce que** R' est de manière extrêmement préférentielle choisi parmi le 2-hexyl 1-decanyle, le 2-octyl 1-dodecanyle et leurs mélanges.

12. - Sauce de couchage selon l'une des revendications 8 à 11, **caractérisée en ce que** ledit polymère hydrosoluble est partiellement ou totalement neutralisé par un ou plusieurs agents de neutralisation disposant d'une fonction monovalente ou d'une fonction polyvalente, choisis préférentiellement parmi les hydroxydes de sodium et de potassium et leurs mélanges.

13. - Sauce de couchage selon l'une des revendications 8 à 12, **caractérisée en ce que** la matière minérale est choisie parmi le carbonate de calcium naturel ou synthétique, le kaolin, le talc, et leurs mélanges et **en ce qu'**elle est préférentiellement un carbonate de calcium naturel ou synthétique ou un kaolin ou leurs mélanges, et **en ce qu'**elle est très préférentiellement un mélange de carbonate de calcium naturel et de kaolin.

14. - Sauce de couchage selon l'une des revendications 8 à 13, **caractérisée en ce qu'**elle contient de 0,1 % à 2 %, préférentiellement de 0,2 % à 0,8 % en poids sec dudit polymère, par rapport au pois sec de matière minérale.
